## Europäisches Patentamt

## European Patent Office

## Office européen des brevets

(19)

(11) Veröffentlichungsnummer: **0 059 254**
**A2**

(12) **EUROPÄISCHE PATENTANMELDUNG**

(21) Anmeldenummer: 81109148.7

(22) Anmeldetag: 28.10.81

(51) Int. Cl.³: **G 06 F 15/40**

(30) Priorität: 27.02.81 DE 3107523

(43) Veröffentlichungstag der Anmeldung:
08.09.82 Patentblatt 82/36

(84) Benannte Vertragsstaaten:
CH FR GB IT LI NL SE

(71) Anmelder: SIEMENS AKTIENGESELLSCHAFT Berlin
und München
Postfach 22 02 61
D-8000 München 22(DE)

(72) Erfinder: Hoffmann, Gerhard, Dipl.-Phys.
Sollner Strasse 10
D-8000 München 71(DE)

(54) **Verfahren und Anordnung zum indizierten Adressieren von Texteinheiten.**

(57) Zum Adressieren von hierarchisch geordneten Texteinheiten (M,S,P,B) sind mehrere Tabellen (T1 bis T4) vorgesehen, die jeweils den Texteinheiten (M,S,P,B) einer Hierarchiestufe zugeordnet sind. Zum Adressieren einer bestimmten Texteinheit (S,P,B) wird zunächst in einer Tabelle (T1), die den Texteinheiten (M) der höchsten Hierarchiestufe zugeordnet ist, der Index der ersten zugehörigen Texteinheit (S) in der zweithöchsten Hierarchiestufe ermittelt. Anschließend werden so lange in weiteren Tabellen (T2, T3), die den Texteinheiten (S, P) der jeweils nächstniedrigen Hierarchiestufe zugeordnet sind, die Indizes der Texteinheiten (P,B) der wiederum nächstniedrigen Hierarchiestufe und/oder die nächsten Texteinheiten (S,P,B) derselben Hierarchiestufe ermittelt, bis der Index der gesuchten Texteinheit (S,P,B) erreicht ist. Jeder Tabelle (T1 bis T4) ist eine Liste L1 bis L4 zugeordnet, die die jeweils nächste freie Stelle in der Tabelle (T1 bis T4) kennzeichnet.

FIG 3

EP 0 059 254 A2

SIEMENS AKTIENGESELLSCHAFT
Berlin und München

Unser Zeichen
VPA 81 P 6718 E

Verfahren und Anordnung zum indizierten Adressieren von Texteinheiten

Die Erfindung bezieht sich auf ein Verfahren und eine Anordnung zum indizierten Adressieren von Texteinheiten, bei dem die Texteinheiten hierarchisch geordnet sind und bei dem die Texteinheiten der niedrigsten Hierarchiestufe unter vorgegebenen physikalischen Adressen in einem Speicher gespeichert sind.

Bei einer Bearbeitung von Texten in Textbearbeitungsgeräten, Textverarbeitungsgeräten und Textkommunikationsgeräten ist eine Vielzahl von Verwaltungsaufgaben zu lösen. Beispielsweise müssen mehrere Texteinheiten zusammengefaßt werden, die physikalischen Adressen von Texteinheiten in einem Speicher ermittelt werden und das Einfügen und Ausfügen von Texteinheiten in eine vorhandene Kettung von Texteinheiten möglich sein.

Es wäre denkbar, ein sequentielles Inhaltsverzeichnis für die Verwaltung der Texteinheiten zu verwenden. In diesem Fall enthält jede Texteinheit die indizierte oder die physikalische Adresse der jeweils nachfolgenden Texteinheit. Ein derartiges sequentielles Inhaltsverzeichnis wird häufig dann angewendet, wenn die Texteinheiten keine hierarchische Struktur aufweisen. Sind beispielsweise die Texteinheiten blockweise in einer Spur eines Magnetbandes oder eines Diskettenspeichers gespeichert, so ist es denkbar, daß am Anfang oder am Ende des Blocks die Adresse des nächstfolgenden Blockes gespeichert ist.

Ret 1 Kdg / 26. Febr. 1981

Ein sequentielles Inhaltsverzeichnis hat jedoch den Nachteil, daß der Zugriff zu einer bestimmten Texteinheit eine verhältnismäßig lange Zeit dauert, da alle vorhergehenden Blöcke gelesen werden müssen, um die Adresse eines gesuchten Blockes zu erhalten.

Der Erfindung liegt daher die Aufgabe zugrunde, ein Verfahren und eine Anordnung anzugeben, mit deren Hilfe es möglich ist, bestimmte Texteinheiten sehr schnell zu adressieren.

Erfindungsgemäß wird die Aufgabe bei dem Verfahren der eingangs genannten Art dadurch gelöst, daß in einer Tabelle, die den Texteinheiten der höchsten Hierarchiestufe zugeordnet sind, der Index der ersten zugehörigen Texteinheit der zweithöchsten Hierarchiestufe ermittelt wird und daß anschließend solange in jeweils einer weiteren Tabelle, die den Texteinheiten der jeweils nächstniedrigen Hierarchiestufe zugeordnet ist, die Indizes der Texteinheiten der wiederum nächstniedrigen Hierarchiestufe und/oder die nächsten Texteinheiten derselben Hierarchiestufe ermittelt werden, bis der Index der gesuchten Texteinheit erreicht ist.

Das Verfahren gemäß der Erfindung hat den Vorteil, daß durch die Verwendung der Tabellen zu bestimmten Texteinheiten sehr schnell zugegriffen werden kann. In der Tabelle, die der Texteinheit der niedrigsten Hierarchiestufe zugeordnet ist, ist unter dem entsprechenden Index die physikalische Adresse der Texteinheit gespeichert. Mit Hilfe des Verfahrens können Texteinheiten auf einfache Weise und sehr schnell ein- und ausgefügt werden, da in den Tabellen lediglich die Indizes geändert werden müssen. Beim Ausfügen von Texteinheiten wird die Kettung nicht neu gebildet, sondern sie wird um die auszufügende Texteinheit gekürzt und die aufgebrochenen Teilketten werden wieder, ohne die ausgefügte Texteinheit, verknüpft. Beim Einfügen wird die Kette an der einzufügenden Position aufgebrochen, die neue Texteinheit eingebaut und anschließend die Kette wieder zusammengefügt.

Zur Erhöhung der Fehlersicherheit ist es vorteilhaft, wenn die Tabellen jeweils die Anzahl der zugehörigen Texteinheiten der jeweils nächstniedrigen Hierarchiestufe enthalten und/oder wenn die Tabellen die Indizes der jeweils vorhergehenden Texteinheiten derselben Hierarchiestufe enthalten.

Weiterhin ist es zweckmäßig, wenn die Tabellen mindestens teilweise Formatdaten und/oder die Adressen von Stichwörtern enthalten, die den entsprechenden Texteinheiten zugeordnet sind.

Für das Einfügen von weiteren Texteinheiten ist es günstig, wenn jeder Tabelle eine Liste zugeordnet ist, die die jeweils nächste freie Stelle der Tabelle kennzeichnet.

Eine vorteilhafte hierarchische Struktur wird dadurch erreicht, daß als Texteinheiten der niedrigsten Hierarchiestufe Bearbeitungseinheiten vorgesehen sind, die in jeweils gleichgroßen Bereichen des Speichers unter entsprechenden physikalischen Adressen adressierbar sind. Insbesondere ist es günstig, wenn jeder Bereich als Spur einer den Speicher bildenden Diskette ausgebildet ist.

Die hierarchische Struktur der Texteinheiten wird auf einfache Weise dadurch erreicht, daß als Texteinheiten der höheren Hierarchiestufen aus mindestens einer Bearbeitungseinheit gebildete Seiten, aus mindestens einer Seite gebildete Schriftstücke und aus mindestens einem Schriftstück gebildete Sendungen vorgesehen sind.

Eine vorteilhafte Anordnung zur Durchführung des Verfahrens ist dadurch gekennzeichnet, daß mehrere Tabellen vorgesehen sind, die jeweils den Texteinheiten einer Hierarchiestufe zugeordnet sind und die den Index der jeweils zugehörigen Texteinheit der nächstniedrigen Hierarchiestufe und/oder den Index der jeweils nächsten zugehörigen Texteinheit derselben Hierarchiestufe enthalten und daß eine Steuereinheit vorgesehen ist, die so lange zeitlich nacheinander die erforderlichen Indizes aus den Tabellen ausliest, bis die gewünschte Texteinheit ermittelt ist.

Für die Tabellen ist kein neuer Speicher erforderlich, wenn die Tabellen im selben Speicher gespeichert sind, in dem auch die Bearbeitungseinheiten gespeichert sind. Zweckmäßigerweise wird beispielsweise eine Spur einer Diskette für die Tabellen reserviert. Bei einem Austausch der Disketten ist dann sichergestellt, daß den Texteinheiten jeweils die entsprechenden Tabellen zugeordnet werden.

Im folgenden wird eine Durchführung des Verfahrens anhand von Zeichnungen näher erläutert. Es zeigen:

Figur 1 ein Blockschaltbild einer Textstation,

Figur 2 eine schematische Darstellung von Texteinheiten,

Figur 3 eine schematische Darstellung der Inhalte von Tabellen und zugehörigen Listen beim Ermitteln einer bestimmten Texteinheit,

Figur 4 eine schematische Darstellung der Inhalte der Tabellen und Listen beim Einfügen einer Texteinheit,

Figur 5 eine schematische Darstellung der Inhalte der Tabellen und Listen beim Ausfügen einer Texteinheit.

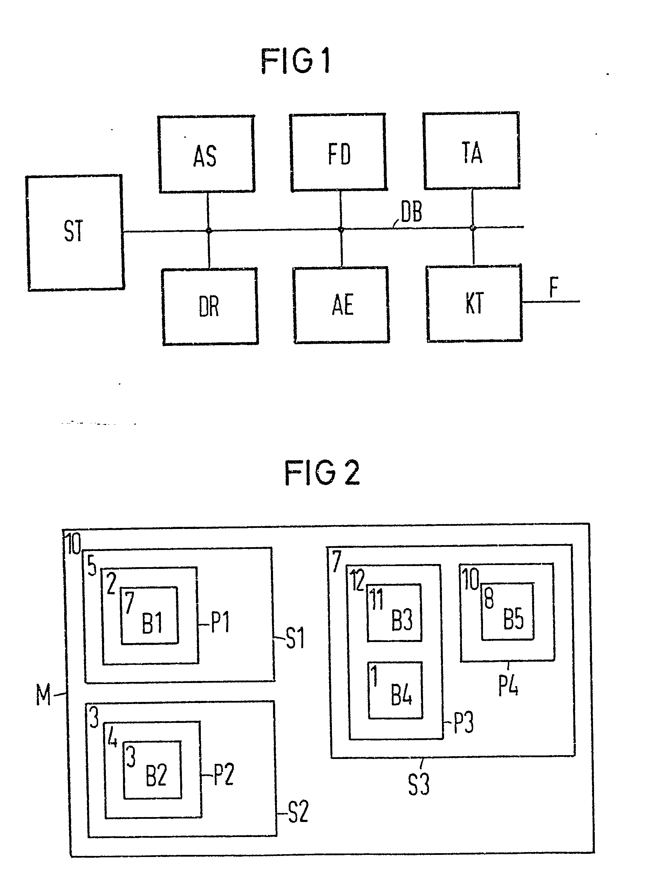

Die in Figur 1 dargestellte Textstation ist als Endgerät für den Telekommunikationsdienst "Teletex" ausgebildet.
Die zeitlichen Abläufe der Funktionen in der Textstation
werden durch eine Steuereinheit ST gesteuert, die üblicherweise mindestens einen Mikroprozessor enthält..
Über einen Datenbus DB sind an dem Mikroprozessor ein
Arbeitsspeicher AS, ein Sekundärspeicher FD, eine Tastatur TA, ein Drucker DR, eine Anzeigeeinheit AE und ein
Kommunikationsteil KT angeschlossen. Der Arbeitsspeicher
AS ist als Halbleiterspeicher ausgebildet, und er dient
als Programmspeicher und als Textspeicher. Der Sekundärspeicher FD kann als Diskettenspeicher (Floppy-Disk-
Speicher) und/oder als Magnetblasenspeicher ausgebildet
sein. Die Tastatur TA enthält Tasten für eine Eingabe
von alphanumerischen Zeichen und Funktionstasten zum Auslösen unterschiedlicher Funktionen. Der Drucker DR ist
in bekannter Weise ausgebildet und enthält ein Typen-
oder ein Mosaikdruckwerk. Das Kommunikationsteil KT ist
mit einer Fernleitung F verbunden und enthält Übertragungseinheiten für das Senden mittels der Tastatur eingegebener Zeichen oder gespeicherter Zeichen und für das Empfangen von Zeichen. Die Anzeigeeinheit AR enthält einen Bildschirm, an dem eingegebene, zu bearbeitende oder empfangene Texte darstellbar sind.

Die Texte sind in Texteinheiten eingeteilt und im Sekundärspeicher FD gespeichert. Vor dem Senden oder vor dem
Bearbeiten der Texte werden die kleinsten Texteinheiten,
die Bearbeitungseinheiten vom Sekundärspeicher FD gelesen
und zum Arbeitsspeicher AS übertragen. Vom Arbeitsspeicher
AS können sie zur Anzeigeeinheit AE übertragen und dort
ausgegeben werden. Sie können auch am Drucker DR ausgegeben werden oder über das Kommunikationsteil KT zu einem
fernen Teilnehmer übertragen werden.

Falls als Sekundärspeicher FD ein Diskettenspeicher vorgesehen ist, sind die Bearbeitungseinheiten auf den Spuren der Diskette gespeichert. Zur einfachen physikalischen Adressierung der Bearbeitungseinheiten entspricht eine Bearbeitungseinheit dem Inhalt einer Spur auf der Diskette. Die Bearbeitungseinheit kann unter einer physikalischen Adresse, der Spurennummer, im Sekundärspeicher FD adressiert werden und dann zum Arbeitsspeicher AS übertragen werden.

Falls ein Text aus mehreren Bearbeitungseinheiten besteht, können diese durch eine Kettung aneinandergefügt werden. Es erweist sich jedoch als zweckmäßig, eine hierarchische Struktur von Texteinheiten einzuführen.

Die hierarchische Struktur von mehreren Texteinheiten ist in Figur 2 dargestellt. Die größte Texteinheit wird als Sendung M bezeichnet. Die Sendung M wird aus einem oder mehreren Schriftstücken S1 bis S3 gebildet. Diese wiederum bestehen aus einer oder mehreren Seiten P1 bis P4. Jede Seite kann wieder aus einer oder mehreren Bearbeitungseinheiten B1 bis B5 bestehen. Eine Bearbeitungseinheit ist beispielsweise ein Absatz eines Textes auf einer Seite.

Im dargestellten Beispiel besteht die Sendung M aus drei Schriftstücken S1 bis S3. Das Schriftstück S1 enthält eine Seite P1, auf der die Bearbeitungseinheit B1 enthalten ist. In entsprechender Weise enthält das Schriftstück S2 eine Seite P2, auf der die Bearbeitungseinheit B2 enthalten ist. Das Schriftstück S3 enthält zwei Seiten P3 und P4. Die Seite P3 enthält zwei Bearbeitungseinheiten B3 und B4, während die Seite B4 eine Bearbeitungseinheit B5 enthält.

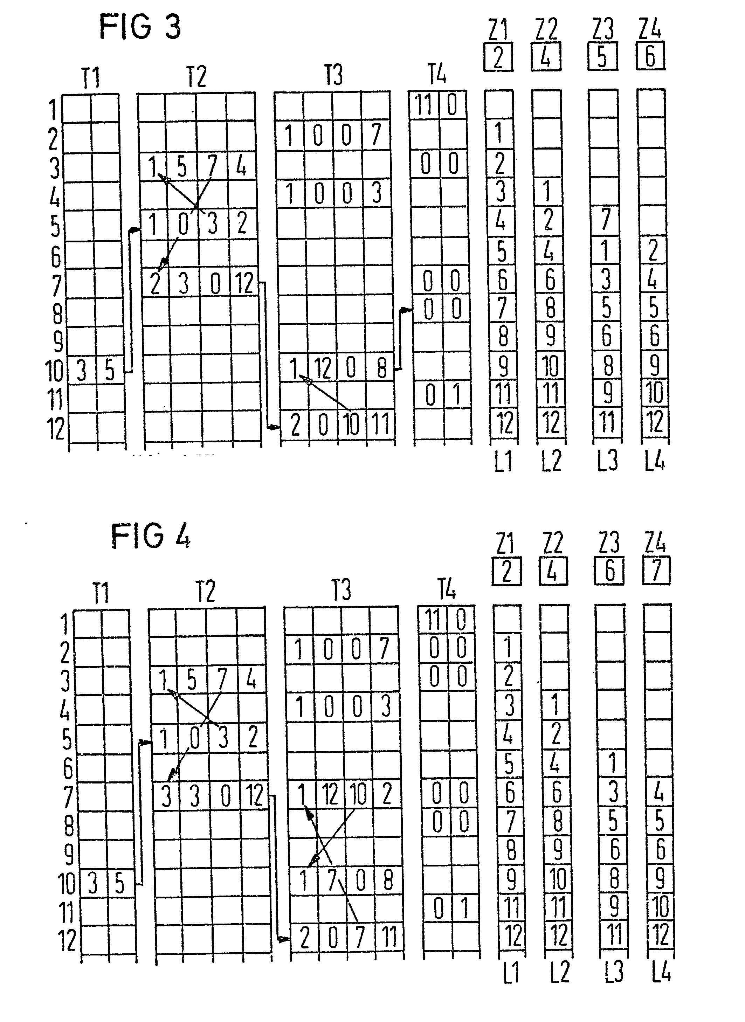

Die Verwaltung der Texteinheiten, beispielsweise das Aufrufen einer bestimmten Seite P oder Bearbeitungseinheit B und das Ein- und Ausfügen von Texteinheiten wird im folgenden anhand der Figuren 3 bis 5 beschrieben.

Bei der Darstellung in Figur 3 wird angenommen, daß bei einer Sendung, wie sie in Figur 2 dargestellt ist, die Speicheradresse für die Seite P4 des dritten Schriftstücks S3 der Sendung Nr. 10 ermittelt werden soll .

Für die Texteinheiten jeder Hierarchiestufe sind als Inhaltsverzeichnis eine der Tabellen T1 bis T4 vorgesehen. Diese Tabellen T1 bis T4 sind beispielsweise auf einer nichtbenutzten Spur, der  Spur 0, der die entsprechenden Texteinheiten enthaltenden Diskette gespeichert. Jeder Tabelle T1 bis T4 ist eine Liste L1 bis L4 zugeordnet, aus der die freien und besetzten Stellen entnehmbar sind. In Freizeigern Z1 bis Z4 ist die jeweils nächste freie Stelle der entsprechenden Tabelle T dargestellt.

Für die Ermittlung der Adresse der Seite P4 werden die Tabellen T1 bis T4 und die Listen L1 bis L4 zunächst von dem Sekundärspeicher FD in den Arbeitsspeicher AS übernommen. Anschließend wird streng hierarchisch der Index der Seite P4 ermittelt. Da die Seite P4 der Sendung M Nr. 10 angehört, wird in der Tabelle T1, die der höchsten Hierarchiestufe zugeordnet ist, unter der indizierten Adresse 10 der Inhalt aufgerufen. In der ersten Spalte der Tabelle T1 ist angegeben, daß die Sendung aus drei Texteinheiten der nächstniedrigen Hierarchiestufe, also aus drei Schriftstücken S besteht. In der zweiten Spalte ist der Index des ersten Schriftstückes S1 mit 5 angegeben. Anschließend wird in der Tabelle T2 unter dem Index 5 der Inhalt ausgelesen. In der ersten Spalte ist dort angegeben, daß dieses Schriftstück S1 eine Seite P1 enthält. In der zweiten Spalte ist der Index des vorhergehenden Schriftstücks angegeben. Da es sich in diesem Fall um das erste Schrifstück der Sendung handelt, ist an der entsprechenden Stelle der Wert 0 eingetragen. Die dritte Spalte gibt den Index 3 des nächstfolgenden Schriftstücks S2 an. Die letzte Spalte gibt den Index der zu
diesem Schriftstück S1 gehörenden ersten Seite P1 in der
Tabelle T3 an. Zusätzlich kann in der Tabelle T2 auch
noch die Adresse eines das Schriftstück kennzeichnenden
Stichworts gespeichert sein. Da die zweite Seite P4 des
dritten Schriftstücks S3 gesucht ist, wird über den Inhalt 3 der vorletzten Spalte auf den Index 3 der Tabelle
T2 verwiesen. Dort ist angegeben, daß das nächstfolgende
Schriftstück S3 unter dem Index 7 in der Tabelle T2
gespeichert ist. Beim Index 7 ist in der Tabelle T2 gespeichert, daß das Schriftstück S3 zwei Seiten enthält,
daß das vorhergehende Schriftstück S2 unter dem Index 3
gespeichert ist, daß es kein folgendes Schriftstück gibt
und daß die Daten der ersten Seite P3 des Schriftstücks
S3 unter dem Index 12 in der Tabelle T3 gespeichert sind.

Die Tabelle T3 ist in ähnlicher Weise aufgebaut wie die
Tabelle T2. In der ersten Spalte ist angegeben, daß die
Seite P3 zwei Bearbeitungseinheiten B enthält, daß es
keine vorhergehende Seite gibt, daß die Daten der nachfolgenden Seite P4 unter dem Index 10 in der Tabelle T3
gespeichert sind und daß die Daten der ersten Bearbeitungseinheit B3 dieser Seite unter dem Index 11 in der Tabelle
T4 gespeichert sind. Die Tabelle T3 kann weiterhin die
Adressen von den Seiten P zugeordneten Formatdaten enthalten, die angeben, welches Format, beispielsweise
DIN A4, die jeweilige Seite hat.

Die Steuereinheit ST ruft anschließend unter dem Index 10
der Tabelle T3 die Daten der zweiten Seite P4 des Schriftstücks S3 auf. Dort ist angegeben, daß diese Seite P4
eine Bearbeitungseinheit B5 enthält, daß die Daten der
vorhergehenden Seite unter dem Index 12 gespeichert
waren, daß es keine folgende Seite gibt und daß die Daten
der ersten Bearbeitungseinheit B5 der Seite P4 unter dem
Index 8 in der Tabelle T4 gespeichert sind. Der Index 8 kann gleichzeitig die physikalische Adresse der Bearbeitungseinheit B5 angeben. Beispielsweise ist die Bearbeitungseinheit B5 auf Spur 8 der Diskette gespeichert. In der ersten Spalte der Tabelle T4 ist angegeben, daß dies die erste Bearbeitungseinheit der Seite P4 ist, daß es also keine vorhergehende Bearbeitungseinheit gibt. In entsprechender Weise ist in der zweiten Spalte der Tabelle T4 angegeben, daß es keine nachfolgende Bearbeitungseinheit gibt.

Für eine Bearbeitung der Seite P4 wird der Inhalt der Spur 8 ausgelesen und in den Arbeitsspeicher AS übertragen. Von dort kann er auf dem Drucker DR oder auf der Anzeigeeinheit AE ausgegeben werden oder über die Fernleitung F übertragen werden.

Bei der Darstellung wurde angenommen, daß lediglich der Inhalt der Sendung 10 bisher im Sekundärspeicher FD gespeichert ist. Die den Listen L1 bis L4 zugeordneten Zeiger Z1 bis Z4 geben die jeweils nächsten freien Stellen in den Tabellen T an. Falls beispielsweise eine neue Sendung M eingespeichert werden soll, werden deren Daten unter den Indizes 1 in den Tabellen T1 und T2 und unter den Indizes 7 bzw. 2 in den Tabellen T3 und T4 gespeichert.

Bei der Darstellung in Figur 4 wird angenommen, daß bei der in Figur 2 dargestellten Sendung M im dritten Schriftstück S3 zwischen der ersten Seiten P3 und der zweiten Seite P4 eine weitere Seite eingefügt werden soll, die eine auf Spur 2 der Diskette gespeicherte Bearbeitungseinheit enthält.

Zunächst wird in gleicher Weise wie bei dem in Figur 3 dargestellten Beispiel der Index 7 des Schriftstückes S3 ermittelt. Da das Schriftstück S3 nach dem Einfügen drei Seiten enthält, wird der Wert 3 in die erste Spalte der Tabelle T2 eingefügt. Anschließend wird der Index 12 der Tabelle T3 adressiert. Mit Hilfe des Zeigers Z3 in Figur 3 wird festgestellt, daß die nächste freie Stelle in der Tabelle T3 die fünfte Stelle ist, in der der Index 7 steht. Die Daten der einzufügenden Seite werden somit unter dem Index 7 in der Tabelle T3 eingespeichert. Beim Index 12 in der Tabelle T3 wird daher als Index der folgenden Seite der Wert 10 in 7 abgeändert. Beim Index 7 ist in Tabelle T3 angegeben, daß die Seite aus einer Bearbeitungseinheit besteht, daß die vorhergehende Seite beim Index 12 gespeichert ist, daß die nachfolgende Seite beim Index 10 gespeichert ist und daß die Bearbeitungseinheit auf Spur 2 der Diskette gespeichert ist. Die Spur 2 war entsprechend der Liste L4 in Figur 3 die nächste freie Spur auf der Diskette. In der Liste L4 wurde daher der Zeiger Z4 auf 7 erhöht. Dieser gibt an, daß die nächste freie Spur die Spur 4 der Diskette ist. In entsprechender Weise wurd durch das Einfügen der zusätzlichen Seite der Zeiger Z3 auf den Wert 6 erhöht, der damit angibt, daß eine weitere Seite bei T3 eingespeichert werden kann.

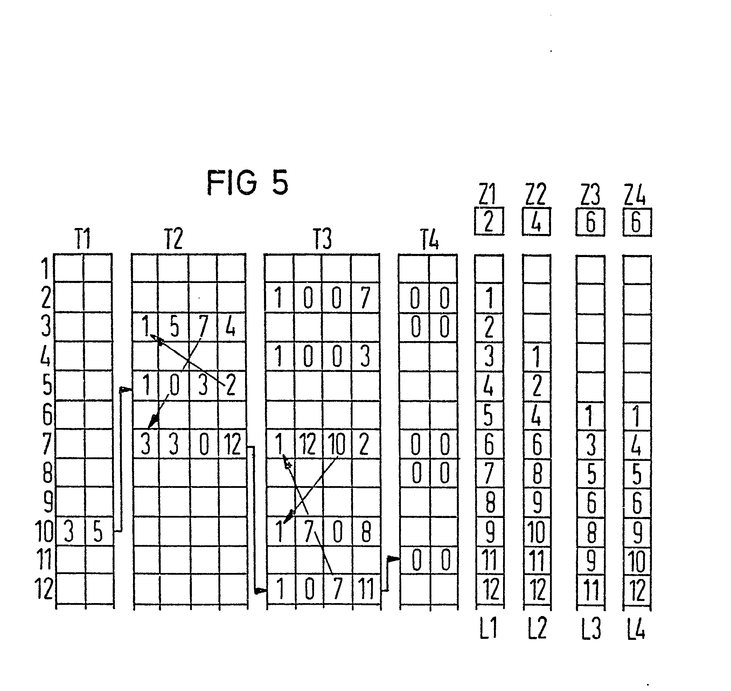

Bei dem in Figur 5 dargestellten Beispiel wird angenommen, daß die zweite Bearbeitungseinheit B4 der ersten Seite P3 des dritten Schriftstücks S3 ausgefügt werden soll.

Bis zur Ermittlung des Index 12 der Tabelle T3 läuft der Vorgang in ähnlicher Weise ab wie bei dem in Figur 4 dargestellten Beispiel. Da die Seite P3 nach dem Ausfügen noch eine Bearbeitungseinheit, die Bearbeitungseinheit B3, enthält, wird in der ersten Spalte der Tabelle T3 der Wert 2 in den Wert 1 abgeändert. Außerdem wird in der Tabelle T4 in der zweiten Spalte der Wert 1 durch den Wert 0 ersetzt, da auf die Bearbeitungseinheit B3 dann keine weitere Bearbeitungseinheit mehr folgt. Die ausgefügte Bearbeitungseinheit B4 wird nicht mehr benötigt, so daß der dem Index 1 zugeordnete Inhalt der Tabelle T4 wieder frei ist. Der Wert des Zeigers Z4 wird daher um den Wert 1 auf den Wert 6 vermindert und an der Stelle 6 wird in der Liste L4 der Wert 1 eingetragen, so daß dadurch kenntlich gemacht wird, daß die nächste freie Stelle in der Tabelle T4 die dem Index 1 zugeordnete Stelle ist.

Die Ermittlung der jeweiligen Indizes, die Aktualisierung der Listen L1 bis L4 und der Zeiger Z1 bis Z4 erfolgt unter Verwendung der Steuereinheit ST, die üblicherweise mindestens einen Mikroprozessor enthält. Durch die hierarchische Struktur der Texteinheiten ist der Mikroprozessor in der Lage, die Indizes der Texteinheiten und gegebenenfalls die physikalischen Adressen der Bearbeitungseinheiten sehr schnell zu ermitteln. Im Gegensatz zu einer sequentiellen Anordnung der Texteinheiten ist es bei dem Verfahren nicht erforderlich, beim Aufrufen einer bestimmten Texteinheit in allen vorhergehenden Texteinheiten die Adressen der jeweils nachfolgenden Texteinheiten zu ermitteln.

10 Patentansprüche
5 Figuren

Patentansprüche

1. Verfahren zum indizierten Adressieren von Texteinheiten, bei dem die Texteinheiten hierarchisch geordnet sind und bei dem die Texteinheiten der niedrigsten Hierarchiestufe unter vorgegebenen physikalischen Adressen in einem Speicher gespeichert sind, d a d u r c h   g e k e n n z e i c h n e t , daß in einer Tabelle (T1), die den Texteinheiten (M) der höchsten Hierarchiestufe zugeordnet ist, der Index der ersten zugehörigen Texteinheit (S) der zweithöchsten Hierarchiestufe ermittelt wird und daß anschließend solange in jeweils einer weiteren Tabelle (T2, T3) die den Texteinheiten (S,P) der jeweils nächstniedrigen Hierarchiestufe zugeordnet ist, die Indizes der Texteinheiten (P,B) der wiederum nächstniedrigen Hierarchiestufe und/oder die nächsten Texteinheiten (S,P,B) derselben Hierarchiestufe ermittelt werden, bis der Index der gesuchten Texteinheit (S,P,B) erreicht ist.

2. Verfahren nach Anspruch 1, d a d u r c h   g e k e n n z e i c h n e t , daß die Tabellen (T1 bis T3) jeweils die Anzahl der zugehörigen Texteinheiten (S,P,B) der jeweils nächstniedrigen Hierarchiestufe enthalten.

3. Verfahren nach Anspruch 1 oder Anspruch 2, d a d u r c h   g e k e n n z e i c h n e t , daß die Tabellen (T2 bis T4) die Indizes der jeweils vorhergehenden Texteinheiten (S, P,B) derselben Hierarchiestufe enthalten.

4. Verfahren nach einem der Ansprüche 1 bis 3, d a d u r c h   g e k e n n z e i c h n e t , daß die Tabellen (T1 bis T4) mindestens teilweise Formatdaten und/oder die Adressen von Stichwörtern enthalten, die den entsprechenden Texteinheiten (M,S,P,B) zugeordnet sind.

5. Verfahren nach einem der Ansprüche 1 bis 4,
d a d u r c h   g e k e n n z e i c h n e t ,
daß jeder Tabelle (T1 bis T4) eine Liste (L1 bis L4)
zugeordnet ist, die die jeweils nächste freie Stelle
der Tabelle (T1 bis T4) kennzeichnet.

6. Verfahren nach einem der Ansprüche 1 bis 5,
d a d u r c h   g e k e n n z e i c h n e t ,
daß als Texteinheiten der niedrigsten Hierarchiestufe
Bearbeitungseinheiten (B1 bis B5) vorgesehen sind, die
in jeweils gleichgroßen Bereichen des Speichers (FD)
unter entsprechenden physikalischen Adressen adressierbar sind.

7. Verfahren nach Anspruch 6,
d a d u r c h   g e k e n n z e i c h n e t ,
daß jeder Bereich als Spur einer den Speicher (FD)
bildenden Diskette ausgebildet ist.

8. Verfahren nach einem der Ansprüche 1 bis 7,
d a d u r c h   g e k e n n z e i c h n e t ,
daß als Texteinheiten der höheren Hierarchiestufen aus
mindestens einer Bearbeitungseinheit (B) gebildeten
Seiten (P), aus mindestens einer Seite (P) gebildete
Schriftstücke (S) und aus mindestens einem Schriftstück
(S) gebildete Sendungen (M) vorgesehen sind.

9. Anordnung zur Durchführung des Verfahrens nach Anspruch 1,
d a d u r c h   g e k e n n z e i c h n e t ,
daß mehrere Tabellen (T) vorgesehen sind, die jeweils
den Texteinheiten (M,S,P,B) einer Hierarchiestufe zugeordnet sind und die den Index der jeweils zugehörigen
Texteinheit (S,P,B) der nächstniedrigen Hierarchiestufe
und/oder den Index der jeweils nächsten zugehörigen Texteinheit (S.P.B) derselben Hierarchiestufe enthalten und
daß eine Steuereinheit (ST) vorgesehen ist, die so lange zeitlich nacheinander die erforderlichen Indizes aus
den Tabellen (T) ausliest, bis die gewünschte Texteinheit (S,P,B) ermittelt ist.


10. Anordnung nach Anspruch 9,
d a d u r c h   g e k e n n z e i c h n e t ,
daß die Tabellen (T) im selben Speicher (FD) gespeichert
sind, in dem auch die Bearbeitungseinheiten (B) gespeichert sind.

## FIG 1

## FIG 2

0059254

# FIG 3

# FIG 4

FIG 5